Europäisches Patentamt

European Patent Office

Office européen des brevets

(19)

(11) EP 0 390 002 B1

(12) EUROPÄISCHE PATENTSCHRIFT

(45) Veröffentlichungstag und Bekanntmachung des Hinweises auf die Patenterteilung:
**12.06.1996 Patentblatt 1996/24**

(51) Int Cl.[6]: **H04B 10/12**, G02B 6/28

(21) Anmeldenummer: **90105650.7**

(22) Anmeldetag: **24.03.1990**

(54) **Optisches Nachrichtenübertragungssystem zur Diplex- oder Duplex-Übertragung**

Optical-communication transmission system for diplex or duplex transmission

Système optique de transmission de communications Diplex ou Duplex

(84) Benannte Vertragsstaaten:
**AT BE CH DE DK ES FR GB IT LI NL SE**

(30) Priorität: **31.03.1989 DE 3910637**

(43) Veröffentlichungstag der Anmeldung:
**03.10.1990 Patentblatt 1990/40**

(73) Patentinhaber: **Alcatel SEL Aktiengesellschaft**
**D-70435 Stuttgart (DE)**

(72) Erfinder: **Fussgänger, Kurt, Dr.**
**D-7148 Remseck 2 (DE)**

(74) Vertreter: **Kugler, Hermann, Dipl.-Phys. et al**
**Alcatel SEL AG**
**Patent- und Lizenzwesen**
**Postfach 30 09 29**
**D-70449 Stuttgart (DE)**

(56) Entgegenhaltungen:
**EP-A- 0 069 054        EP-A- 0 233 617**
**EP-A- 0 265 918        DE-A- 3 417 644**

**Beschreibung**

Die Erfindung betrifft ein optisches Nachrichtenübertragungssystem nach dem Oberbegriff des Patentanspruchs 1 oder dem des Patentanspruchs 2.

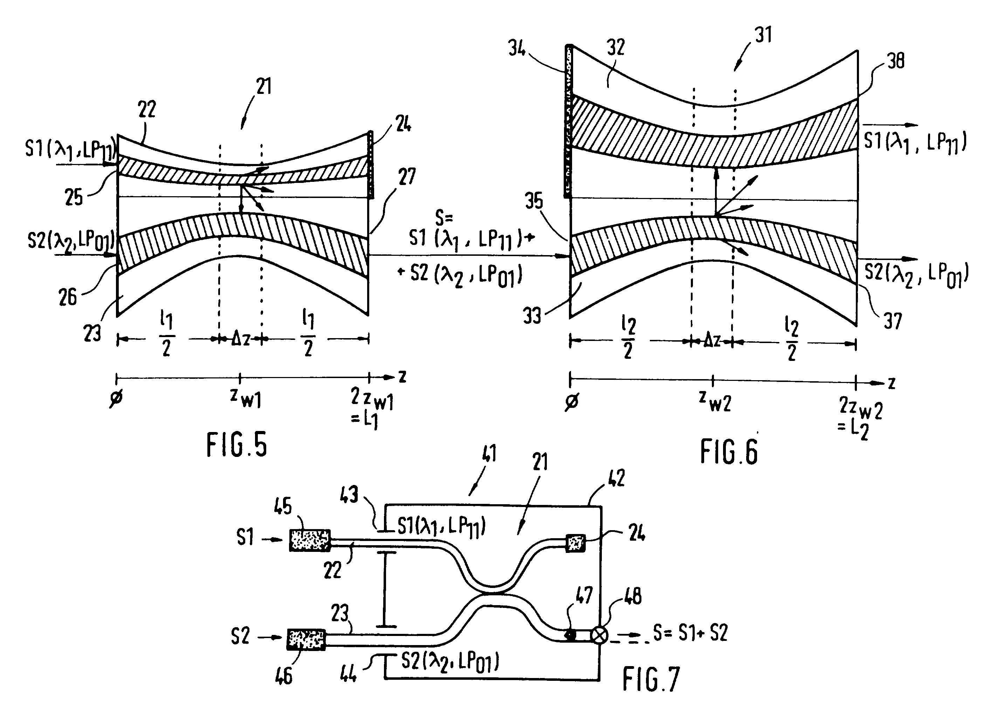

Ein derartiges System ist aus der EP-A2-0 265 918 bekannt. Dort ist ein Diplex-Übertragungssystem, d.h. ein Multiplex-Übertragungssystem zweier Signale über einen einzigen Lichtwellenleiter in unidirektionaler Richtung, in einem Ausführungsbeispiel in Fig. 5 gezeigt. Dabei werden die beiden Signale mit derselben Wellenlänge, jedoch unterschiedlichen Lichtwellenleiter-Moden übertragen, so daß das Übertragungsverfahren als Lichtwellenleiter-Moden-Multiplexverfahren bezeichnet werden kann. Die beiden in den verschiedenen Moden zu übertragenden optischen Signale werden mit Hilfe eines Einmodenfaser-Fusionskopplers, der aus zwei gleichen Einmodenfasern hergestellt ist, in den Lichtwellenleiter eingekoppelt, d.h. der Multiplexer ist ein Lichtwellenleiter-Fusionskoppler.

Im folgenden wird bisweilen statt des Ausdrucks "Lichtwellenleiter" der einfachere Ausdruck "Faser" verwendet.

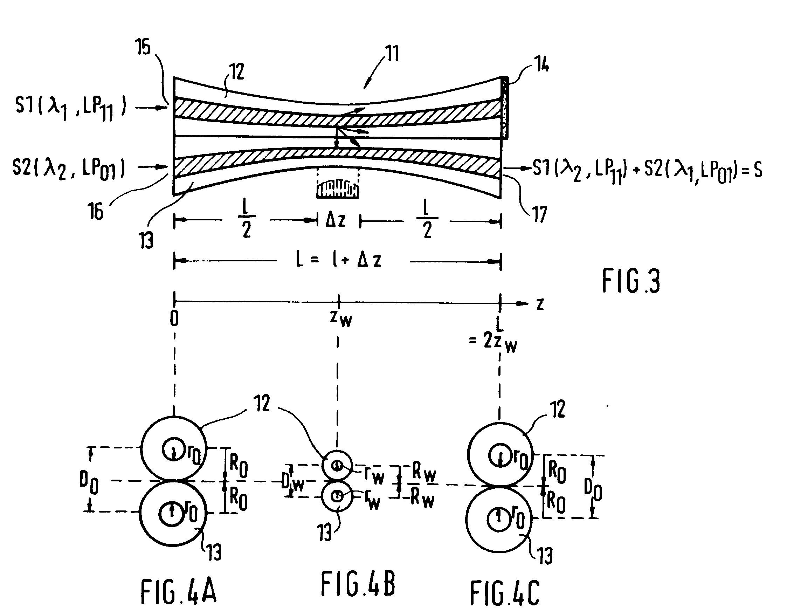

Mit zwei weiteren Ausführungsbeispielen nach Fig. 3 und Fig. 4 zeigt die genannte Veröffentlichung jeweils ein optisches Duplex-Nachrichtenübertragungssystem, d.h. ein bidirektionales optisches Nachrichtenübertragungssystem für zwei optische Signale. Bei dem Ausführungsbeispiel nach Fig. 3 handelt es sich um ein Wellenlängenmultiplexsystem, und die beiden Signale werden in demselben Lichtwellenleiter-Modus, nämlich dem Grundmodus, übertragen, und bei dem Ausführungsbeispiel nach Fig. 4 handelt es sich um ein Lichtwellenleiter-Moden-Multiplexsystem, und die beiden optischen Signale haben dieselbe Lichtwellenlänge. Als Duplexer zum Trennen der beiden Lichtwellenlängen bei dem Ausführungsbeispiel nach Fig. 3 sind wellenlängenselektive Lichtwellenleiter-Fusionskoppler vorgesehen. Als Duplexer zum Trennen der beiden unterschiedlichen Moden sind bei dem Ausführungsbeispiel nach Fig. 4 Modenfilter (MF2,MF1) vorhanden, und auch bei dem Diplex-Übertragungssystem nach Fig. 5 ist empfangsseitig zum Trennen der beiden Moden ein entsprechendes Modenfilter (MF) vorhanden. Über diese Modenfilter ist gesagt, daß sie im einfachsten Falle "getaperte" Standard-Einmodenlichtwellenleiter wie in Fig. 6 sind oder daß sie auch Koppler, wie sie in einer anderen Literaturstelle gezeigt sind, sein können. Solche Koppler sind aber, wie diese Literaturstelle zeigt keine Fusionskoppler, sondern Anschliffkoppler.

Allen genannten Beispielen ist das Prinzip gemeinsam, daß die verwendeten Übertragungs-Lichtwellenlängen deutlich unterhalb der Grenzwellenlänge des Lichtwellenleiters liegen. Die Multiplexer, Demultiplexer oder Duplexer sind in allen Fällen dazu ausgelegt, die optischen Signale aufgrund einer einzigen Eigenschaft, entweder aufgrund ihrer Wellenlänge oder aufgrund des Lichtwellenleitermodus, in dem sie sich über den Lichtwellenleiter ausbreiten, voneinander zu trennen oder im Fall des Multiplexers ein Summensignal aus ihnen zu bilden.

In jedem Falle kommt es darauf an, eine möglichst effektive Einkopplung oder Auskopplung beim Zusammenführen oder Trennen der beiden optischen Signale zu erreichen. Es kann schwierig sein, solche Koppler mit dem erforderlichen Wirkungsgrad herzustellen, z.B. wenn bei Anwendung des Wellenlängenmultiplex die beiden Wellenlängen nicht weit auseinanderliegen.

Aus EP-A-0 069 054 ist ein Einmodenfaser-Fusionskoppler bekannt, der aus im Kern- und Manteldurchmesser ungleichen Fasern hergestellt ist. Er soll als Wellenlängen-Multiplexer oder Wellenlängen-Demultiplexer verwendet werden.

Aus DE-A-3 417 644 ist ein optisches Nachrichtenübertragungssystem bekannt, das im Wellenlängen-Duplex arbeitet. Mit einer Wellenlänge oberhalb der Grenzwellenlänge des Übertragungs-Lichtwellenleiters erfolgt eine einmodige Übertragung von breitbandigen Signalen, und über eine Wellenlänge unterhalb der Grenzwellenlänge des Übertragungs-Lichtwellenleiters erfolgt eine vielmodige Übertragung von schmalbandigen Signalen. Wie die gezeigten Duplexer realisiert werden sollen, ist nicht angegeben.

Es ist daher die Aufgabe der Erfindung, ein Diplex- oder Duplex-Übertragungssystem für die Übertragung zweier optischer Signale anzugeben, das hinsichtlich Wellenlängen und Moden und hinsichtlich der verwendeten Multiplexer, Demultiplexer oder Duplexer anders als die aus der eingangs genannten Veröffentlichung bekannten Systeme ist.

Eine erste Lösung, bei der beide Wellenlängen unterhalb der Grenzwellenlänge des Lichtwellenleiters liegen und als Multiplexer, Demultiplexer und Duplexer Fusionskoppler mit ungleichen Fasern verwendet werden, ist Gegenstand des Anspruchs 1 und eine zweite Lösung, bei der nur eine der beiden Lichtwellenlängen unterhalb der Grenzwellenlänge des Lichtwellenleiters liegt und die Multiplexer, Demultiplexer und Duplexer Fusionskoppler sind, die aus gleichen Fasern hergestellt sind, ist Gegenstand des Anspruchs 2. Weiterbildungen der Lösungen sind den Unteransprüchen entnehmbar.

Beide Lösungen haben den Vorteil, daß die Koppler relativ zu ihrer Kopplungseffizienz einfache und kostengünstige zu stellende Systemkomponenten sind, so daß im Ergebnis die Systeme kostengünstig sind und gute optische Eigenschaften haben.

Die Erfindung wird nun anhand der Zeichnungen beispielsweise näher erläutert. Es zeigen:

Fig. 1                in schematischer Darstellung ein optisches Diplex-Nachrichtenübertragungssystem gemäß der Erfindung,

Fig. 2 in schematischer Darstellung ein optisches Duplex-Nachrichtenübertragungssystem gemäß der Erfindung,

Fig. 3 in schematischer Darstellung einen Längsschnitt durch einen an sich bekannten Einmodenfaser-Fusionskoppler mit gleichen Fasern in einer für ein System gemäß der Erfindung geeigneten neuen Betriebsweise,

Fig. 4 A,B,C die jeweiligen Querschnitte der Einmodenfasern in verschiedenen Längenabschnitten des Kopplers nach Fig. 3,

Fig. 5 in schematischer Darstellung einen Längsschnitt durch einen Einmodenfaser-Fusionskoppler einer ersten Variante mit ungleichen Fasern für ein optisches Nachrichtenübertragungssystem gemäß der Erfindung,

Fig. 6 in schematischer Darstellung einen Längsschnitt durch einen Einmodenfaser-Fusionskoppler einer zweiten Variante mit ungleichen Fasern für ein optisches Nachrichtenübertragungssystem gemäß der Erfindung,

Fig. 7 in schematischer Darstellung einen Multiplexer unter Verwendung eines Einmodenfaser-Fusionskopplers nach Fig. 5 für ein optisches Nachrichtenübertragungssystem gemäß der Erfindung,

Fig. 8 in schematischer Darstellung einen Demultiplexer unter Verwendung eines Einmodenfaser-Fusionskopplers nach Fig. 6 für ein optisches Nachrichtenübertragungssystem gemäß der Erfindung,

Fig. 9 in schematischer Darstellung einen Duplexer unter Verwendung eines Kopplers nach Fig. 5 für das eine Ende eines Duplex-Nachrichtenübertragungssystems gemäß der Erfindung,

Fig. 10 in schematischer Darstellung einen Duplexer unter Verwendung eines Kopplers nach Fig. 6 für das andere Ende eines Duplex-Nachrichtenübertragungssystems gemäß der Erfindung.

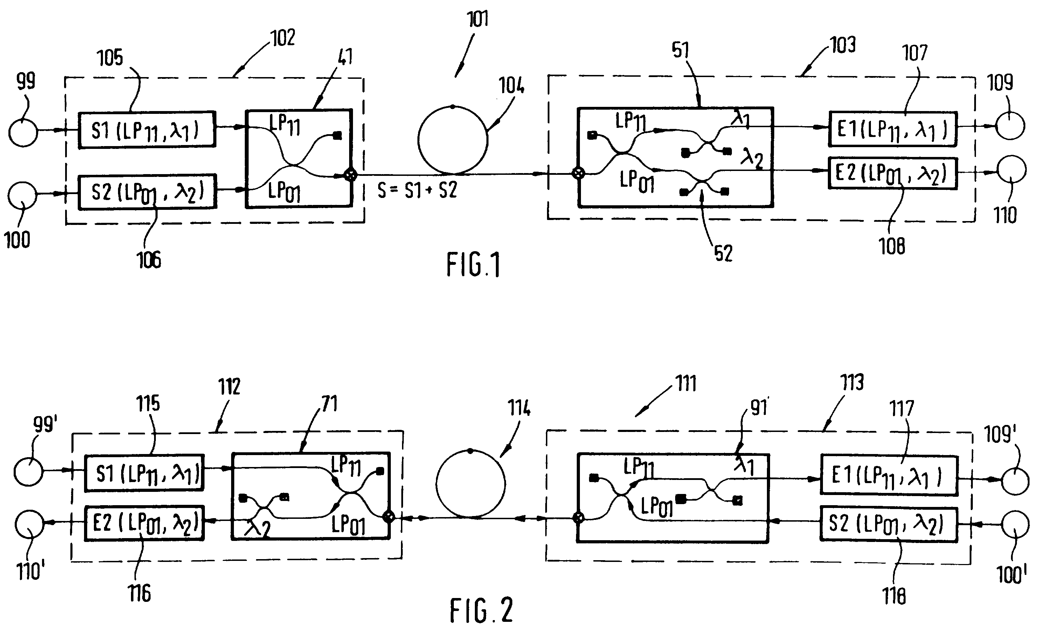

Die Fig. 1 zeigt ein unidirektionales optisches Nachrichtenübertragungssystem 101, bei dem zwei optische Signale in derselben Richtung über einen einzigen Lichtwellenleiter übertragen werden. Ein solches Übertragungssystem wird als Diplex-Übertragungssystem bezeichnet.

Bei diesem System ist eine Sendestelle 102 über einen Lichtwellenleiter 104, der eine Länge in der Größenordnung von 5 km hat, mit einer Endstelle 103 verbunden. Die Sendestelle kann dabei eine Kopfstation und die Empfangsstelle eine Teilnehmerstation eines Nachrichtenübertragungssystems für den Teilnehmeranschlußbereich sein. In die Sendestelle 102 gelangt von einem ersten Sender 99 ein optisches Signal S1 mit einer Wellenlänge $\lambda_1$ und von einem zweiten Sender 100 ein Signal S2 mit einer Wellenlänge $\lambda_2$. Mit nicht dargestellten Mitteln wird dafür gesorgt, daß das optische Signal S2 im Lichtwellenleiter-Grundmodus $LP_{01}$ und das optische Signal S1 im nach dem Grundmodus nächsthöheren Lichtwellenleiter-Modus $LP_{11}$ übertragen wird. Das Vorhandensein dieser Signale S1 und S2 mit den verschiedenen Wellenlängen und verschiedenen Moden ist in Fig. 1 durch Blöcke 105 und 106 dargestellt.

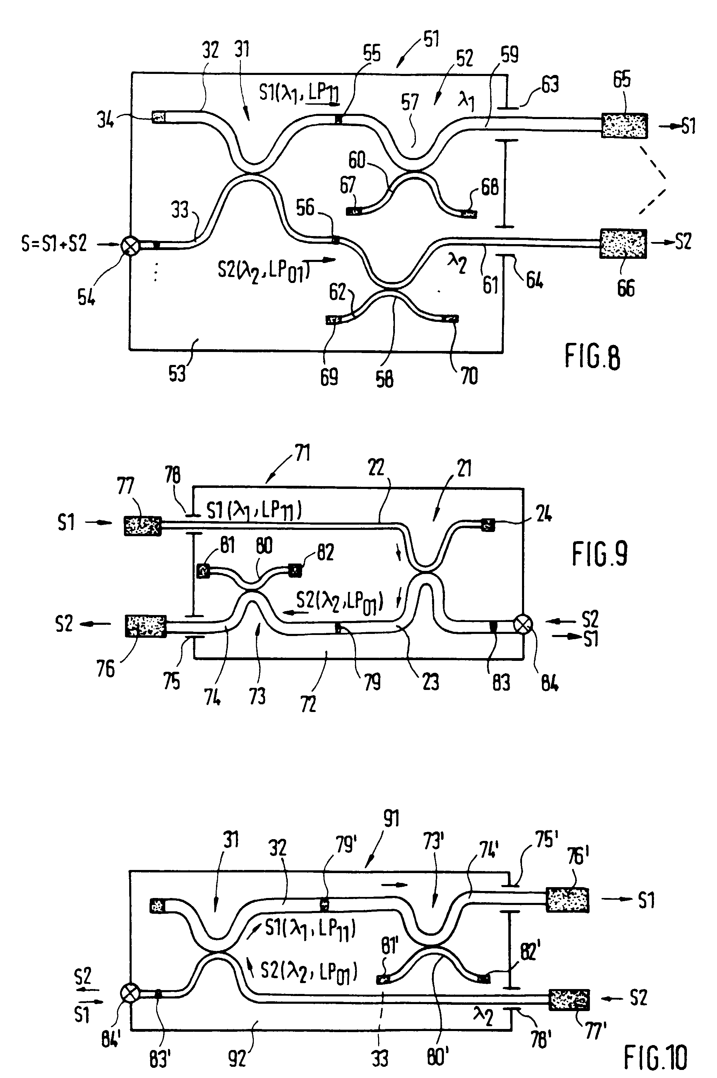

Die Sendestelle 102 besitzt einen Multiplexer 41, der anhand der Figuren 3, 5 und 7 noch näher erläutert wird. Er vereinigt die beiden optischen Signale S1 und S2 zu einem Summensignal und speist dieses in den die Übertragungsstrecke bildenden Lichtwellenleiter 104 ein, der es zur Empfangsstelle 103 überträgt. Diese besitzt einen Demultiplexer, wie er anhand von Fig. 6 und Fig. 8 noch näher erläutert wird. Der Demultiplexer trennt die beiden übertragenen optischen Signale S1 und S2 voneinander und gibt an seinen Ausgängen zwei den Signalen S1 und S2 entsprechende Empfangssignale E1 und E2 ab. Das Signal E1 hat die Wellenlänge $\lambda_1$ und den höheren Lichtwellenleitermodus $LP_{11}$ wogegen das Signal S2 die Wellenlänge $\lambda_2$ und den Lichtwellenleiter-Grundmodus $LP_{01}$ hat, was durch Blöcke 107 und 108 dargestellt ist. Diese Signale E1 und E2 werden in nicht dargestellter Weise optischen Empfängern 109 und 110 zugeführt. Ihr Inhalt kann beispielsweise aus Fernsehprogrammen und Stereo-Rundfunkprogrammen bestehen, die in einem optischen Kabelfernsehen-Verteilsystem zu der Teilnehmern übertragen werden. Über die Art des Multiplexers 41 und des Demultiplexers 51 und die Lage der Wellenlängen $\lambda_1$ und $\lambda_2$ werden an späterer Stelle Erläuterungen gegeben.

Die Fig. 2 zeigt ein bidirektionales optisches Nachrichtenübertragungssystem 111, bei dem zwei optische Signale in entgegengesetzten Richtungen über einen einzigen Lichtwellenleiter 114 übertragen werden. Ein solches System wird Duplex-Übertragungssystem genannt.

Dieses System 111 hat eine Sende-Empfangs-Station 112, die sich z.B. bei einer Vermittlungsstation befinden kann, und eine Sende-Empfangs-Station 113, die sich z.B. bei einem Teilnehmer befinden kann. Beide Stationen sind über einen Lichtwellenleiter 114 mit einer Länge von größenordnungsmäßig 5 km miteinander verbunden. Beispielsweise dient dieses optische Nachrichtenübertragungssystem für eine interaktive Signalübertragung in einem schmalbandigen oder breitbandigen diensteintegrierten digitalen Netz.

Sowohl die vermittlungsseitige Sende-Empfangs-Station 112, als auch die teilnehmerseitige Sende-Empfangs-Station 113 ist mit einem optischen Sender 99' bzw. 100' und einem optischen Empfänger 110' bzw. 109' verbunden. Der optische Sender 99' und nicht dargestellte andere Mittel sorgen dafür, daß die Sende-Empfangs-Station 112 ein Sendesignal S1 mit einer Wellenlänge $\lambda_1$ aussendet und dieses im höheren Lichtwellenleiter-Modus $LP_{11}$ übertragen

EP 0 390 002 B1

wird. In der anderen Sende-Empfangs-Station 113 sorgen der optische Sender 100' und nicht dargestellte andere Mittel, daß ein Sendesignal S2 mit einer Wellenlänge $\lambda_2$ im Lichtwellenleiter-Grundmodus $LP_{01}$ über die Übertragungsstrecke übertragen wird. Das Vorhandensein dieser Sendesignale ist in der Station 112 durch einen Block 115 und in der Station 113 durch einen Block 118 dargestellt.

Aus dem von der Station 112 zur Station 113 übertragenen Sendesignal S1 entsteht in der Station 113 ein Empfangssignal E1 mit demselben Modus und derselben Lichtwellenlänge, was dort durch einen Block 117 dargestellt ist, und aus dem von der Station 113 zur Station 112 übertragenen Sendesignal S2 entsteht in der Station 112 ein Empfangssignal mit derselben Lichtwellenlänge $\lambda_2$ und dem Grundmodus $LP_{01}$, was dort durch einen Block 116 dargestellt ist.

Die vermittlungsseitige Sende-Empfangsstation 112 enthält einen Duplexer 71, der in Fig. 9 dargestellt ist und an späterer Stelle erläutert wird. Auf der einen Seite (Sender-Empfänger-Seite) wird ihm an einem Anschluß das Sendesignal S1 vom Block 115 eingegeben, und einem anderen Anschluß gibt er das Empfangssignal E2 in Richtung zum optischen Empfänger 110' ab. Auf seiner anderen Seite (Übertragungsstrecken-Seite) ist er mit dem Lichtwellenleiter 114 verbunden.

Die teilnehmerseitige Station 113 besitzt einen Duplexer 91, der in Fig. 10 dargestellt ist und an späterer Stelle erläutert wird. Dieser hat eine Sender-Empfänger-Seite mit einem ersten Anschluß, in den das Sendesignal S2 vom Block 118 eingegeben wird und mit einem zweiten Anschluß, an dem er das Empfangssignal E1 ausgibt, und eine Übertragungsstrecken-Seite mit einem Anschluß, der mit dem Lichtwellenleiter 114 verbunden ist.

Beiden Systemen nach Fig. 1 und Fig. 2 ist gemeinsam, daß die verschiedenen Signale sich durch den Modus, in dem sie über den Lichtwellenleiter übertragen werden, und durch ihre Wellenlänge unterscheiden. Es handelt sich also um ein Moden-Wellenlängen-Diplex-Übertragungssystem bei dem System nach Fig. 1 und um ein Moden-Wellenlängen-Duplex-Übertragungssystem bei dem System nach Fig. 2, wobei mit Moden die Ausbreitungsmoden des Lichts im Lichtwellenleiter gemeint sind.

Hinsichtlich der Wellenlängen und der Struktur der verwendeten Systembestandteile wie Multiplexer, Demultiplexer (bei Fig. 1) und Duplexer (bei Fig. 2) gibt es erfindungsgemäß sowohl für das Diplex-System nach Fig. 1 als auch das Duplex-System nach Fig. 2 zwei Alternativen.

Bei der ersten Alternative sind die Bestandteile wie Multiplexer, Demultiplexer und Duplexer, im folgenden alle vereinfacht als Koppler bezeichnet, Faser-Fusionskoppler, bei denen die Fasern, aus denen sie durch Fusion hergestellt sind, gleiche Fasern sind.

Die Wellenlänge $\lambda_2$, d.h. des im Grundmodus übertragenen Signals liegt bei dieser Alternative oberhalb der Grenzwellenlänge $\lambda_c$ des Lichtwellenleiters, und die Wellenlänge $\lambda 1$ des im höheren Modus übertragenen Signals liegt unterhalb der Grenzwellenlänge.

Bei der zweiten Alternative bestehen die verwendeten Koppler jeweils aus ungleichen Fasern, derart, daß jeder Koppler eine Standard-Einmodenfaser enthält, die zur Führung des im Grundmodus übertragenen Signals vorgesehen ist und eine gegenüber der Standard-Einmodenfaser dünnere oder dickere Faser, die zur Führung des nächsthöheren Modus $LP_1$, vorgesehen ist. Ob diese zweite Faser dünner oder dicker als die Standard-Einmodenfaser ist, hängt davon ab, ob sie in dem betreffenden Koppler dazu dient, das im höheren Modus zu übertragende Licht in die andere Faser einzukoppeln oder es aus der Standard-Einmodenfaser auszukoppeln. In beiden Fällen sind solche Koppler so verwendet, daß ihre Standard-Einmodenfaser einerseits mit dem Übertragungs-Lichtwellenleiter (104 bzw. 114) und andererseits mit dem Sender oder Empfänger verbunden ist, von dem bzw. zu dem ein optisches Signal im Fasergrundmodus $LP_{01}$ übertragen wird. Die Wellenlängen $\lambda_1$ und $\lambda_2$ der übertragenen Signale liegen bei dieser Alternative beide unterhalb der Grenzwellenlänge $\lambda_c$ des Übertragungs-Lichtwellenleiters 104 bzw. 114.

Anhand der Fig. 3 bis 10 werden nun die beiden Alternativen der als Multiplexer, Demultiplexer und Duplexer anzuwendenden Koppler im einzelnen erläutert.

Fig. 3 zeigt einen an sich bekannten Einmodenfaser-Fusionskoppler 11, der aus zwei gleichen Fasern 12 und 13 hergestellt ist. Die dabei dargestellte Betriebsart als Moden- und Wellenlängenmultiplexer ist eine neue für das neue System nach Fig. 1 geeignete Betriebsart. Die zu seiner Herstellung verwendeten Fasern 12 und 13 sind zwei gleiche Standard-Einmodenfasern mit folgenden Eigenschaften:

| | |
|---|---|
| Faserkern-Radius: | $r_o = 4.35\ \mu m$ |
| Fasermantel-Radius: | $R_o = 62.5\ \mu m$ |
| Brechzahldifferenz: | $\Delta_n = 3.10^{-3}$ |
| Grenzwellenlänge: | $\lambda_c = 1270\ nm$ |
| $\lambda_o$ (bei min. Dispersion): | $\lambda_o = (1310 \pm 15)\ nm$ |

Die in den Fig. 3 und 4 verwendeten Bezeichnungen stellen folgendes dar:

$\Delta_z =$      Länge der Fusionsflamme

4

l = Koppler-Ausziehlänge ohne Flammenlänge

L = Kopplerlänge (L = l + Δz) = Fusionslänge

$r_o$ = Radius des Faserkernes vor dem Ausziehen

$R_o$ = Radius des Fasermantels vor dem Ausziehen

$D_o$ = Abstand der Faserkerne vor dem Ausziehen

$r_w$ = Radius des Faserkernes in Kopplermitte

$R_w$ = Radius des Fasermantels in Kopplermitte bei $z_w$

$D_w$ = Abstand der Faserkerne in Kopplermitte bei $z_w$

$z_w$ = Länge des Kopplers bis zur Kopplermitte

$$z_w = \frac{L}{2} = \frac{l + \Delta z}{2}$$

Die beiden Fasern 12 und 13 werden bei der Herstellung des Fusionskopplers 11 derart ausgezogen, daß sie sich von ihren jeweiligen Enden her zur Mitte sowohl im Kern - als auch im Manteldurchmesser verjüngen, wie dies aus den Teilfiguren 4 hervorgeht. Bei diesem sogenannten "Tapern" der Standard-Einmodenfasern 12 und 13 verringert sich der vom Kernradius $r_0$ von seinem normalen Maß bis auf einen Kernradius $r_w$ von etwa 1 μm. Die eine der beiden Fasern des Fusionskopplers 11, in der Zeichnung die im oberen Teil gezeigte Faser 12, hat an ihrem einen Ende einen reflexionsfreien Abschluß 14.

Der Fusionskoppler wird nun wie folgt als Multiplexer 41 nach Fig. 1 verwendet:

In ein Ende 15 der Faser 12 wird ein optisches Signal S1 eingespeist, dessen Wellenlänge unterhalb der Grenzwellenlänge $\lambda_c$ des als Übertragungsstrecke verwendeten Lichtwellenleiters liegt, also beispielsweise 788 nm beträgt. Dieses Signal S1 wird in dem nach dem Fasergrundmodus $LP_{01}$ nächst höheren Fasermodus $LP_{11}$ übertragen und liegt bei der Einspeisung in das Kopplerende 15 bereits in diesem Modus vor. In ein auf derselben Seite des Kopplers 11 befindliches Ende 16 der anderen Faser 13 wird ein zweites optisches Signal S2 eingespeist, das eine über der Grenzwellenlänge $\lambda_c$ des Lichtwellenleiters der Übertragungsstrecke liegende Wellenlänge $\lambda_2$, z.B. 1300 nm hat. Dieses Signal S2 wird im Fasergrundmodus $LP_{01}$ in den Koppler 11 eingespeist und in demselben Modus über die Übertragungsstrecke übertragen.

Die Grenzwellenlänge $\lambda_c$ des Lichtwellenleiters der Übertragungsstrecke ist dieselbe wie die der Standard-Einmodenfasern 12 und 13, da auch der Übertragungs-Lichtwellenleiter eine solche Standard-Einmodenfaser ist. Der Einmodenfaser-Fusionskoppler 11 besitzt die Eigenschaft, daß an dem Ende 17 der Faser 13 ein Summensignal S = S1 + S2 erscheint. Diese Eigenschaft ergibt sich in folgender Weise:

Durch das oben erwähnte "Tapern" der Standard-Einmodenfasern 12 und 13 auf einen Kernradius $r_w$ von etwa 1 μm erniedrigt sich die normierte Frequenz der Faserkerne, so daß das zunächst im $LP_{11}$-Fasermodus geführte optische Signal seine Führung im Kern der Faser 12 verliert, in deren Fasermantel gelangt und von dort in den Fasermantel der anderen Faser 13 überkoppelt. Dabei gelangt dieses $LP_{11}$-Signal in den Kern dieser anderen Faser 13 und wird dort weitergeführt, weil mit steigendem Faserkerndurchmesser die normierte Frequenz des Kerns der Faser 13 wieder ansteigt. Dadurch ist der Einmodenfaser-Fusionskoppler 11 modenselektiv, denn das Signal mit dem gegenüber dem Fasergrundmodus $LP_{01}$ nächsthöheren Fasermodus $LP_{11}$ koppelt in den Kern der anderen Faser 13 über, während der Fasergrundmodus $LP_{01}$ in der Faser 12 verbleibt, in die er ursprünglich eingekoppelt wurde. Die Berechnungsgrundlage, insbesondere, wenn das "Tapern" exponentiell verläuft, ergibt sich aus einem Artikel von J. Bures et al in "APPLIED OPTICS", Vol. 22, No. 12, Juni 1983, S. 1918-1922.

Da die sogenannte V-Zahl des Faserkerns von der Lichtwellenlänge abhängig ist, sind auch $r_w$, $D_w$, l, L und $z_w$ wellenlängenabhängig. Die normierte Frequenz $V_w$ des Faserkerns erreicht jeweils an der Stelle $z_w$ gerade die normierte Grenzwellenlänge des Kopplers für den nächsthöheren Fasermodus. Modenselektive Fusionskoppler 11 mit gleichen Einmodenfasern 12 und 13, gleichgültig ob sie für eine unidirektionale Betriebsweise wie in Fig. 3 gezeigt oder für eine bidirektionale Betriebsweise vorgesehen sind, sind daher für die Wellenlänge $\lambda_1$ des im höheren Fasermodus $LP_{11}$ übertragenen optischen Signals auszulegen. Ansonsten wäre nicht mehr gewährleistet, daß das Überkoppeln des im höheren Fasermodus $LP_{11}$ übertragenen Signals im Bereich Δz erfolgt. Das Überkoppeln außerhalb des Bereichs würde zu höheren und damit zu nicht mehr zulässigen Verlusten im $LP_{11}$-Signal führen, da kein oder nur ein schwaches Überkoppeln auftreten würde.

Erfindungsgemäß wird der in den Fig. 3 und 4 dargestellte Einmodenfaser-Fusionskoppler 11 mit gleichen Standard-Einmodenfasern 12 und 13 mit unterschiedlichen Wellenlängen der Signale S1 und S2 betrieben derart, daß die Wellenlänge $\lambda_1$ des im höheren Modus übertragenen optischen Signals deutlich unterhalb der Grenzwellenlänge $\lambda_c$ und die Wellenlänge $\lambda_2$ des im Grundmodus übertragenen optischen Signals oberhalb der Grenzwellenlänge $\lambda_c$ liegt.

Dieser Koppler kann auch in umgekehrter Richtung betrieben werden, derart, daß ein die beiden Signale S1 und S2 enthaltendes Summensignal S an der Stelle 17 in den Koppler 11 eingegeben wird und die beiden Signale S1 und S2 an den Faserenden 15 und 16 des Kopplers 11 ausgegeben werden. In diesem Falle ist der in Fig. 3 dargestellte Kopplerausgang als Kopplereingang und die Kopplereingänge 15 und 16 als Kopplerausgänge verwendet. Die letztere Betriebsart des Kopplers ist die des Demultiplexers, der in Fig. 1 als Demultiplexer 51 gezeigt ist.

In einer weiteren Betriebsart des Fusionskopplers 11 wird das Signal S1 in das Faserende 15 eingekoppelt und am Faserende 17 ausgegeben. In dieses Faserende 17 wird von der Gegenrichtung her das Signal S2 eingegeben und am Faserende 16 ausgegeben, wobei S1 und S2 die bei Fig. 3 oder Fig. 2 angegebenen Moden und Wellenlängen haben. Dies ist die Betriebsart, bei der der Koppler als Duplexer 71 des Systems nach Fig. 2 verwendet ist.

In einer weiteren Betriebsart kann der Koppler 11 so verwendet werden, daß in das Faserende 16 das Signal S2 eingegeben und am Faserende 17 ausgegeben wird und daß in das Faserende 17 von der Gegenrichtung her das Signal S1 eingegeben und am Faserende 15 ausgegeben wird. Bei dieser Betriebsart ist der Koppler als Duplexer 91 des Systems nach Fig. 2 verwendbar. In jedem Falle hat der Koppler die Eigenschaft, daß das im Grundmodus in eine Faser eingekoppelte Signal in dieser Faser weitergeführt wird, wogegen das im höheren Modus eingekoppelte Signal in die andere Faser übergekoppelt wird.

Anhand der Fig. 5 und 6 wird nun das Prinzip der im Zusammenhang mit Fig. 1 und Fig. 2 entsprechend der zweiten Alternative zu verwendenden Koppler mit ungleichen Fasern erläutert. Fig. 5 zeigt einen Einmodenfaser-Fusionskoppler 21, der aus ungleichen Einmodenfasern 22 und 23 hergestellt ist, und Fig. 6 zeigt einen Einmodenfaser-Fusionskoppler 31, der aus ungleichen Einmodenfasern 32 und 33 hergestellt ist. Die Bedeutung der dabei dargestellten Abmessungen ergibt sich aus der Legende zu Fig. 3. Bei einem Einmodenfaser-Fusionskoppler 21 ist die Faser 23 eine Standard-Einmodenfaser mit z.B. folgenden Daten:

$$r_o = \quad 4,35 \ \mu m$$
$$R_o = \quad 62,5 \ \mu m$$
$$\Delta n = \quad 10^{-3}$$
$$\lambda_c = \quad 1270 \ nm,$$

wogegen die Einmodenfaser 22 eine im Kern- und Manteldurchmesser dünnere Einmodenfaser ist. Beide Fasern 22 und 23 sind, wie beim Ausführungsbeispiel nach Fig. 3 einem "Taper"-Vorgang unterzogen, d.h. sie sind von ihren beiden Enden her zur Mitte hin vorzugsweise exponentiell verjüngt.

Dieser Koppler 21 kann wie folgt in einer Betriebsweise als Fasermoden-Multiplexer verwendet werden:

In die dünnere Einmodenfaser 22 wird an einem Ende 25 ein Signal S1 mit einer Wellenlänge $\lambda_1$ in dem gegenüber dem Fasergrundmodus $LP_{01}$ nächsthöheren Fasermodus $LP_{11}$ eingespeist. Das andere Ende dieser Faser 22 ist mit einem reflexionsfreien Abschluß 24 versehen. In die zweite Faser 23 des Kopplers wird von derselben Seite, an der der Koppler 21 das Faserende 25 hat, an dem mit 26 bezeichneten Faserende der Standard-Einmodenfaser 23 ein Signal S2 eingespeist, das eine Wellenlänge $\lambda_2$ hat und im Fasergrundmodus $LP_{01}$ übertragen wird. Beim Ausführungsbeispiel ist die Wellenlänge $\lambda_1$ des Signals S1 788 nm und die Wellenlänge $\lambda_2$ des zweiten Signals S2 830 nm, so daß beide Wellenlängen deutlich unterhalb der Grenzwellenlänge $\lambda_c$ von z.B. 1270 nm des Standard-Lichtwellenleiters liegen.

Auch bei diesem Koppler 21 wird das im nächsthöheren Fasermodus $LP_{11}$ übertragene Signal S1 aus der Faser 22, in die es eingekoppelt wird, in die andere Faser 23 übergekoppelt, so daß an dem mit 27 bezeichneten Ende der Faser 23 ein sich aus der Addition der beiden Signale S1 und S2 ergebendes Summensignal ausgesendet wird, da das im Fasergrundmodus $LP_{01}$ übertragene Signal S2 die Standard-Einmodenfaser 23 unbehindert durchläuft. Beim Koppler 21 geschieht die Überkopplung des im höheren Modus $LP_{11}$ übertragenen Signals aus der dünneren Faser 22 in die Standard-Einmodenfaser 23 und findet hauptsächlich in dem Bereich $\Delta z$ des Kopplers statt.

Der Einmodenfaser-Fusionskoppler 31 nach Fig. 6 enthält ebenso wie der nach Fig. 5 eine Standard-Einmodenfaser, die mit 33 bezeichnet (und im unteren Teil dargestellt) ist. Ihre Daten sind gleich denen der bei Fig. 5 verwendeten Standard-Einmodenfaser 23. Als zweite Faser besitzt der Fusionskoppler 31 eine im Kern- und Manteldurchmesser dickere Einmodenfaser 32, die an einem Ende, in Fig. 6 als linkes Ende dargestellt, einen reflexionsfreien Abschluß 34 hat. Beide Fasern 33 und 32 sind wie die Fasern 22 und 23 des Kopplers 21 nach Figur 5 einem Taper-Vorgang unterzogen. Wird nun in ein Ende 35 der Standard-Einmodenfaser 33, das sich auf derselben Seite des Kopplers 31 wie der reflexionsfreie Abschluß 34 der anderen Faser 32 befindet, ein aus den anhand von Fig. 5 genannten Signalen S1 und S2 gebildetes Summensignal S = S1 + S2 eingespeist, so wird hauptsächlich in dem Bereich $\Delta z$ des Fusionskopplers 31 aus dem Summensignal S derjenige Teil S1 in die dickere Faser 32 übergekoppelt, der mit der Wellenlänge $\lambda_1$ im nächsthöheren Modus $LP_{11}$ übertragen wird, während das Signal S2, das mit der Wellenlänge $\lambda_2$ im Fasergrundmodus $LP_{01}$ übertragen wird, die Standard-Einmodenfaser 33 ungehindert durchläuft, so daß am Faserende 37 der Standard-Einmodenfaser das Signal S2 im Grundmodus und an dem Ende 38 der dickeren Faser 32 das im höheren Modus $LP_{11}$ übertragene Signal S1 erscheint.

In der bisherigen geschilderten Betriebsweise ist der Fusionskoppler 21 als Multiplexer 41 des Diplex-Übertragungssystem nach Fig. 1 verwendbar, wogegen der Koppler 31 als Demultiplexer 51 desselben Systems verwendbar ist. Wie im Zusammenhang mit Fig. 1 erwähnt, ist beiden Kopplern gemeinsam, daß sie aus zwei ungleichen Fasern bestehen, und das System nach Fig. 1 hat die Eigenschaft, daß beide Wellenlängen deutlich unterhalb der Grenzwellenlängen der Standard-Einmodenfasern (der Koppler und der Übertragungsstrecke) liegen.

Im Falle des Kopplers 21, bei dem das im höheren Modus übertragene Licht aus der einen Faser in die Standard-Einmodenfaser übergekoppelt werden soll, ist diese eine Faser dünner als die Standard-Einmodenfaser, und im Falle des Kopplers 31, bei dem aus der Standard-Einmodenfaser Licht in die andere Faser übergekoppelt werden soll, ist diese andere Faser dicker als die Standard-Einmodenfaser.

Bei den beiden Fusionskopplern 21 und 31 sind die Kern- und Manteldurchmesser der Fasern 22, 23 bzw. 32, 33 proportional zum Verhältnis der Lichtwellenlängen $\lambda_1, \lambda_2$ gewählt. Im Falle des Kopplers 31 ergeben sich für das Signal S1 in der dünneren Faser 22 und für das Signal S2 in der Standard-Einmodenfaser 23 gleiche $V_0$ - und $V_W$- Zahlen, und $z_W$, l, L des Kopplers 21, ebenso beim Koppler 31, weisen für beide Lichtwellenlängen $\lambda_1, \lambda_2$ gleiche Werte auf. Das Signal S1 in der dünneren Faser 22 und das Signal S2 in der Standard-Einmodenfaser 23 des Kopplers 21 koppeln nach gleicher Kopplerlänge $z_W$ im Bereich $\Delta z$ über. Beispielsweise in schlechten Steckverbindungen oder an Spleißstellen in den nächsthöheren Fasermodus $LP_{11}$ umgewandelte Signale S2, die im Fusionskoppler 21 den Kern der Standard-Faser verlassen, werden in der dünneren Faser 22 weitergeführt und im reflexionsfreien Abschluß 24 vernichtet. Es wäre beispielsweise auch möglich, eine Wellenlänge $\lambda_2$ für das zweite Signal S2 im Bereich der Grenzwellenlänge $\lambda_c$, z.B. von 1200 nm zu verwenden, jedoch würde dann die Überkopplung am Ende des Bereiches $\Delta z$ oder knapp außerhalb erfolgen, was zu einem höheren optischen Verlust im jeweiligen $LP_{11}$-Signal führen würde. Entsprechendes läßt sich für den Faserkoppler 31 nach Fig. 6 ausführen.

Die Figur 7 zeigt eine praktische Realisierung eines Fasermoden-Multiplexers des Systems nach Fig. 1, der einen Fusionskoppler 21 gemäß Fig. 5 verwendet. Der Fusionskoppler 21 ist innerhalb eines Gehäuses 42 angeordnet, aus dem durch Durchführungen 43, 44 die beiden Fasern 22 und 23 herausgeführt sind und in einem optischen Stecker 45, 46 zum Anschluß an die optischen Sender enden. Über die optischen Stecker werden die beiden Signale S1 ($\lambda_1$, $LP_{11}$) und S2 ($\lambda_2$, $LP_{01}$) in den Fasermoden-Multiplexer eingegeben. Über einen Spleiß 47 und eine optische Steckkupplung 48 wird das Summensignal S = S1 + S2 aus dem Fasermultiplexer 41 zum Übertragungs-Lichtwellenleiter herausgeführt.

Die Fig. 8 zeigt die praktische Realisierung eines Fasermoden-Demultiplexers 51 für das System nach Fig. 1, der einen Fusionskoppler 31 gemäß Fig. 6 verwendet. Der Fusionskoppler 31 ist ebenso wie die anderen noch zu beschreibenden Teile des Demultiplexers 51 in einem Gehäuse 53 angeordnet und eingangsseitig mit einer optischen Steckkupplung 54 versehen, der das Summensignal S zugeführt wird. Sowohl der das Signal S1 führende Ausgang des Fusionskopplers 31 als auch der das Signal S2 führende Ausgang des Fusionskopplers 31 ist über einen Spleiß 55 bzw. 56 mit einem wellenlängenselektiven Demultiplexer 57 bzw. 58 optisch verbunden, dessen einer Zweig 59 bzw. 61 über eine Durchführung 63 bzw. 64 aus dem Gehäuse 53 herausgeführt und mit einem optischen Stecker von 60 bzw. 66 verbunden ist. Die an den optischen Steckern austretenden Signale S1 und S2 werden in nicht dargestellter Weise jeweils einem Empfänger zugeführt.

Der jeweils zweite Zweig 60 bzw. 62 des wellenlängenselektiven Demultiplexers 57 bzw. 58 ist an beiden Ende mit einem reflexionsfreien Kopplerabschluß 67 bis 70 versehen. Die wellenlängenselektiven Demultiplexer 57 bzw. 58 dienen der optischen Nachfilterung und sollen die optische Fernnebensprechdämpfung der Signale noch erhöhen.

Die wellenlängenselektiven Demultiplexer 57 bzw. 58 dienen auch dazu, eventuell an Steckverbindungen und/oder Spleißen auftretendes Störlicht aufzufangen und zu vernichten. Derartiges Störlicht könnte sich beispielsweise dadurch ergeben, daß ein Teil des Signals S aus dem Fasergrundmodus $LP_{01}$ in den nächsthöheren Fasermodus $LP_{11}$ umgewandelt wird oder dadurch, daß ein Teil des Signals S1 aus dem nächsthöheren Fasermodus $LP_{11}$ in den Fasergrundmodus $LP_{01}$ umgewandelt wird.

Statt der hier gezeigten Faserschmelzkoppler zur Realisierung der wellenlängenselektiven Demultiplexer 57 und 58 können auch übliche Bauteile, z.B. andere Arten von wellenlängenselektiven Kopplern oder dichroitische Interferenz-Kantenfilter oder Beugungsgitter, vorgesehen sein.

Die wellenlängenselektiven Demultiplexer können, obwohl sie in Fig. 1 als Bestandteil des Demultiplexers 51 dargestellt sind auch entfallen, wenn die vorstehend geschilderten Probleme des Störlichts nicht vorhanden sind.

Die Fig. 9 zeigt einen Fasermoden-Duplexer 71 des Duplex-Systems nach Fig. 2, in dem ein Faserkoppler 21 nach Fig. 5 verwendet ist. Der Fasermoden-Duplexer 71 enthält innerhalb eines Gehäuses 72 außer dem Fusionskoppler 21 einen wellenlängenselektiven Demultiplexer 73, dessen durchgehender erster Zweig 74 über eine Durchführung 75 aus dem Gehäuse 72 herausgeführt und mit einem optischen Stecker 76 verbunden ist, der in nicht dargestellter Weise mit einem zu einem Empfänger führenden Lichtwellenleiter verbunden ist. Ein anderer optischer Stecker 77, der in nicht dargestellter Weise mit einem von einem Sender kommenden Lichtwellenleiter verbunden ist, ist mit der dünneren Faser 22 des Fusionskopplers 21 verbunden, und diese Faser 22 verläuft durch eine Durchführung 78 im Gehäuse 72 hindurch. Die Standardfaser 23 des Fusionskopplers 21 ist über einen Spleiß 79 mit dem anderen Ende des ersten Zweiges 74 des wellenlängenselektiven Demultiplexers 73 verbunden. Der zweite Zweig 80 des Demultiplexers 73 ist an beiden Enden mit einem reflexionsfreien Abschluß 81 bzw. 82 versehen.

Das andere Ende der Faser 23 des Fusionskopplers 21, das auf derselben Seite des Fusionskopplers wie der reflexionsfreie Abschluß 24 der Faser 22 liegt, ist über einen Spleiß 83 und eine optische Kupplung 84 in nicht dargestellter Weise über den Übertragungslichtwellenleiter mit einer entfernten Sende-Empfangs-Station verbunden.

Bei diesem Ausführungsbeispiel, bei dem der Fusionskoppler 21 in einer Duplex-Betriebsweise verwendet ist, wird also das mit der Wellenlänge $\lambda_1$ im nächsthöheren Fasermodus $LP_{11}$ übertragene Signal S1 von einem Sender her kommend im Fusionskoppler 21 zunächst in die dünnere Faser 22 eingekoppelt und von dieser in die Standard-Einmodenfaser 23 übergekoppelt, die es auf den zur entfernten Sende-Empfangs-Station führenden Lichtwellenleiter weiterleitet. In der Gegenrichtung wird das von dort kommende Signal S2 mit der Wellenlänge $\lambda_1$ im Fasergrundmodus $LP_{01}$ in die Standard-Einmodenfaser 23 eingekoppelt und bleibt in dieser, durchläuft den wellenlängenselektiven Demultiplexer 23, falls dieser vorhanden ist, und gelangt zum nicht gezeigten Empfänger.

Es wird also das im Fasergrundmodus übertragende Licht in die Standard-Einmodenfaser eingekoppelt und in dieser weitergeführt, und das im höheren Modus zu übertragende Licht wird in die dünnere Faser eingekoppelt und von dieser in die Standard-Einmodenfaser übergekoppelt.

In Fig. 10 ist ein für das andere Ende des in Fig. 2 gezeigten Duplex-Übertragungssystems vorgesehener Duplexer 91 gezeigt. Dieser Duplexer 91 enthält innerhalb eines Gehäuses 92 einen Fusionskoppler 31, wie er in Fig. 6 gezeigt ist und, falls erforderlich oder günstig, einen wellenlängenselektiven Demultiplexer 73' dessen erster Zweig 74' über eine Durchführung 75' aus dem Gehäuse 92 herausgeführt und mit einem optischen Stecker 76' verbunden ist, welcher in nicht dargestellter Weise mit einem zu einem Empfänger führenden Lichtwellenleiter verbunden ist. Ein zweiter optischer Stecker 77', der in nicht dargestellter Weise mit einem von einem Sender kommenden Lichtwellenleiter verbunden ist, ist mit der Standard-Einmodenfaser 33 verbunden, die über eine Durchführung 78' in das Gehäuse 92 hineingeführt ist. Der wellenlängenselektive Demultiplexer 73', dessen zweiter Zweig 80' mit reflexionsfreien Abschlüssen 81' bzw. 82' an beiden Enden versehen ist, ist mit dem anderen Ende seines ersten Zweigs 74' über einen Spleiß 79' mit der dickeren Faser 32' des Fusionskopplers 31 verbunden. Das andere Ende der Standard-Einmodenfaser 33 des Fusionskopplers 31 ist über einen Spleiß 83' und eine optische Steckkupplung 84' mit dem nicht dargestellten Übertragungslichtwellenleiter verbunden, der zu einer entfernten Sende-Empfangs-Station führt.

Bei dieser Betriebsart des Fusionskopplers 31, bei dem er als Duplexer verwendet ist, wird (wie beim Duplexer nach Fig. 9) ein Signal S2 im Grundmodus und mit einer Wellenlänge $\lambda_2$ in der Standard-Einmodenfaser geführt, so daß mit dem die Übertragungsstrecke bildenden Lichtwellenleiter bei diesem Duplexer (wie bei dem in Fig. 9 gezeigten) der Anschluß des Kopplers, an dem das im Grundmodus geführte Licht austritt, mit dem Übertragungs-Lichtwellenleiter verbunden ist. In diesen Koppleranschluß gelangt von der entfernten Sende-Empfangsstation das im höheren Modus übertragene Signal S1 mit der Wellenlänge $\lambda_1$, das der Duplexer aus der Standard-Einmodenfaser 33 auszukoppeln hat. Dies erfolgt mit Hilfe der zweiten Faser 32, die dicker als die Standard-Einmodenfaser ist.

In einem Duplexer mit zwei ungleichen Fasern, wobei die erste der beiden ungleichen Fasern eine Standard-Einmodenfaser ist, ist also die zweite Faser eine dünnere Faser, wenn der Duplexer die Aufgabe hat, das im höheren Modus geführte Signal in die Standard-Einmodenfaser einzukoppeln (Fig. 9), und die zweite Faser ist eine dickere Faser, wenn der Duplexer die Aufgabe hat, das im höheren Modus geführte Signal aus der Standard-Einmodenfaser auszukoppeln (Fig.10).

Es ist darauf hinzuweisen, daß jegliche Arten der vorstehend beschriebenen Koppler auch ohne die zusätzlichen Wellenlängenselektiven Demultiplexer neben ihrer Modenselektivität auch eine beträchtliche Wellenlängenselektivität haben.

## Patentansprüche

1. Optisches Nachrichtenübertragungssystem (101,111) zur Diplex- oder Duplex-Übertragung zweier optischer Signale (51,52), insbesondere für den Teilnehmeranschlußbereich, mit zwei optischen Sendern (99,100,99',100') und zwei optischen Empfängern (109,110,109',110'), von denen der eine mit dem einen optischen Sender und der andere mit dem anderen optischen Sender zusammenarbeitet, mit einem Lichtwellenleiter (104, 114), in dem oberhalb einer Grenzwellenlänge Licht nur im Grundmodus ausbreitungsfähig ist, bei dem die optischen Sender und Empfänger mit Betriebswellenlängen arbeiten, die deutlich unterhalb der Grenzwellenlänge liegen, und bei dem die an den Enden des Lichtwellenleiters vorhandenen optischen Sender und/oder Empfänger über Multiplexer oder Demultiplexer oder Duplexer an das jeweilige Ende des Lichtwellenleiters angeschlossen sind,
**dadurch gekennzeichnet,**

   - daß die von den optischen Sendern (99,100;99',100') in den Lichtwellenleiter (104,114) eingestrahlten optischen Signale (S1,S2) unterschiedliche Wellenlängen ($\lambda_1,\lambda_2$) haben und in unterschiedlichen Lichtwellenleiter-Moden ($LP_{11},LP_{01}$) übertragen werden, und
   - daß der Multiplexer (41) und der Demultiplexer (51) oder die Duplexer (71,91) jeweils Einmodenfaser-Fusionskoppler (21,31) sind, die aus im Kern- und Manteldurchmesser ungleichen Fasern (22,23;32,33) hergestellt sind.

**2.** Optisches Nachrichtenübertragungssystem (101,111) zur Diplex - oder Duplex-Übertragung zweier optischer Signale (51,52), insbesondere für den Teilnehmeranschlußbereich, mit zwei optischen Sendern (99,100,99',100') und zwei optischen Empfängern (109,110,109',110'), von denen der eine mit dem einen optischen Sender und der andere mit dem anderen optischen Sender zusammenarbeitet, mit einem Lichtwellenleiter (104,114), in dem oberhalb einer Grenzwellenlänge Licht nur im Grundmodus ausbreitungsfähig ist,

bei dem die an den Enden des Lichtwellenleiters vorhandenen optischen Sender und/oder Empfänger über Multiplexer oder Demultiplexer oder Duplexer an das jeweilige Ende des Lichtwellenleiters angeschlossen sind, bei dem im Falle zweier über einen Multiplexer an ein Lichtwellenleiter-Ende angeschlossener optischer Sender der Multiplexer ein aus gleichen Fasern hergestellter Einmodenfaser-Fusionskoppler ist,

**dadurch gekennzeichnet,**

- daß in diesem Falle auch der Demultiplexer (51) und im Falle von Duplexern (71,91) diese aus gleichen Fasern (12,13) hergestellte Einmodenfaser-Fusionskoppler (11) sind, und
- daß die von den optischen Sendern (99,100;99',100') in den Lichtwellenleiter (104,114) eingestrahlten optischen Signale (S1,S2) unterschiedliche Lichtwellenlängen $(\lambda_2,\lambda_1)$ haben und das eine im Lichtwellenleiter-Grundmodus $(LP_{01})$ und das andere im nach dem Grundmodus nächsthöheren Modus $(LP_{11})$ übertragen wird,

wobei das im höheren Modus $(LP_{11})$ übertragene optische Signal (S1) eine erste Wellenlänge $(\lambda_1)$ hat, die unterhalb der Grenzwellenlänge des Lichtwellenleiters (103,114) liegt, und das im Grundmodus $(LP_{01})$ übertragene optische Signal eine zweite Wellenlänge $(\lambda_2)$ hat, die oberhalb der Grenzwellenlänge des Lichtwellenleiters liegt.

**3.** System nach Anspruch 1,
**dadurch gekennzeichnet,**

- daß eine der ungleichen Fasern (22,23) eines Fusionskopplers (21,31) eine Standard-Einmodenfaser (23,33) ist und einerseits an den Lichtwellenleiter (104,114) und andererseits an den optischen Sender (100,100′) oder Empfänger (110,110′) angekoppelt ist, zwischen denen ein optisches Signal im Grundmodus $(LP_{01})$ übertragen wird,
- daß die andere Faser (22,32) eines Fusionskopplers (21,31) entweder dünner als die Standard-Einmodenfaser (23,33) und mit dem Sender verbunden ist, dessen optisches Signal im höheren Modus $(LP_{11})$ übertragen wird oder dicker als die Standard-Einmodenfaser (23,33) und mit dem Empfänger verbunden ist, der für den Empfang des im höheren Modus $(LP_{11})$ übertragenen optischen Signals (S1) vorgesehen ist

**4.** System nach Anspruch 1, 2 oder 3,
**dadurch gekennzeichnet,**

- daß der Demultiplexer (51), und/oder die Duplexer (71,91) jeweils in einer zum optischen Empfänger (109,110,109′,110′) führenden Faser einen wellenlängenselektiven Demultiplexer (57,58, 73,73′) zur Nachfilterung enthalten.

**5.** System nach Anspruch 4,
**dadurch gekennzeichnet,**

- daß der wellenlängenselektive Demultiplexer (57,58,73,73′) ein wellenlängenselektiver Einmodenfaser-Fusionskoppler ist.

**6.** System nach Anspruch 4 oder 5,
**dadurch gekennzeichnet,**

- daß der Multiplexer (41), der Demultiplexer (51) die Duplexer (71,91) und die wellenlängenselektiven Demultiplexer (57,58,73,73′) einzelne integriert-optische Bauelemente sind.

**7.** System nach Anspruch 4 oder 5,
**dadurch gekennzeichnet,**

- daß der Demultiplexer (51), und/oder die Duplexer (71,91) jeweils mit den wellenlängenselektiven Demultiplexern (57,58,73,73′) zu gemeinsamen integriert-optischen Bauelementen vereinigt sind.

**Claims**

1. Optical communication system (101, 111) for the diplex or duplex transmission of two optical signals (S1, S2), in particular for the subscriber connection sector, having two optical transmitters (99, 100, 99', 100') and two optical receivers (109, 110, 109', 110'), of which one interacts with the one optical transmitter and the other interacts with the other optical transmitter, having an optical waveguide (104, 114) in which light is capable of propagation only in the fundamental mode above a critical wavelength, in which the optical transmitters and receivers operate at operational wavelengths which are markedly below the critical wavelength and in which the optical transmitters and/or receivers present at the ends of the optical waveguide are connected to the respective end of the optical waveguide by means of multiplexers or demultiplexers or duplexers, characterized

   - in that the optical signals (S1, S2) radiated into the optical waveguide (104, 114) by the optical transmitters (99, 100; 99', 100') have different wavelengths ($\lambda_1$, $\lambda_2$) and are transmitted in different optical waveguide modes ($LP_{11}$, $LP_{01}$), and
   - in that the multiplexer (41) and the demultiplexer (51) or the duplexers (71, 91) are each monomode fibre fusion couplers (21, 31) made from fibres (22, 23; 32, 33) of unequal core diameter and cladding diameter.

2. Optical communication system (101, 111) for the diplex or duplex transmission of two optical signals (S1, S2), in particular for the subscriber connection sector, having two optical transmitters (99, 100, 99', 100') and two optical receivers (109, 110, 109', 110'), of which one interacts with the one optical transmitter and the other interacts with the other optical transmitter, having an optical waveguide (104, 114) in which light is capable of propagation only in the fundamental mode above a critical wavelength, in which the optical transmitters and/or receivers present at the ends of the optical waveguide are connected to the respective end of the optical waveguide by means of multiplexers or demultiplexers or duplexers, in which, in the case of two optical transmitters connected by means of a multiplexer to one optical waveguide end, the multiplexer is a monomode fibre fusion coupler made from identical fibres, characterized

   - in that, in this case, the demultiplexer (51) and in the case of duplexers (71, 91), the latter are monomode fibre fusion couplers (11) made from identical fibres (12, 13), and
   - in that the optical signals (S1, S2) radiated into the optical waveguide (104, 114) by the optical transmitters (99, 100; 99', 100') have different wavelengths ($\lambda_2$, $\lambda_1$) and one is transmitted in the optical waveguide fundamental mode ($LP_{01}$) and the other in the next-higher mode ($LP_{11}$) after the fundamental mode, the optical signal (S1) transmitted in the higher mode ($LP_{11}$) has a first wavelength ($\lambda_1$) which is below the critical wavelength of the optical waveguide (103, 114) and the optical signal transmitted in the fundamental mode ($LP_{01}$) has a second wavelength ($\lambda_2$) which is above the critical wavelength of the optical waveguide.

3. System according to Claim 1, characterized

   - in that one of the unequal fibres (22, 23) of a fusion coupler (21, 31) is a standard monomode fibre (22, 33) and is coupled, on the one hand, to the optical waveguide (104, 114) and, on the other hand, to the optical transmitter (100, 100') or receiver (110, 110') between which an optical signal is transmitted in the fundamental mode ($LP_{01}$),
   - in that the other fibre (22, 32) of a fusion coupler (21, 31) is either thinner than the standard monomode fibre (23, 33) and is connected to the transmitter whose optical signal is transmitted in the higher mode ($LP_{11}$) or thicker than the standard monomode fibre (23, 33) and is connected to the receiver which is provided for the reception of the optical signal (S1) transmitted in the higher mode ($LP_{11}$).

4. System according to Claim 1, 2 or 3, characterized

   - in that the demultiplexer (51) and/or the duplexer (71, 91) each contain a wavelength-selective demultiplexer (57, 58, 73, 73') for post-filtering in a fibre leading to the optical receiver (109, 110, 109', 110').

5. System according to Claim 4, characterized

   - in that the wavelength-selective demultiplexer (57, 58, 73, 73') is a wavelength-selective monomode fibre fusion coupler.

6. System according to Claim 4 or 5, characterized

- in that the multiplexer (41), the demultiplexer (51), the duplexers (71, 91) and the wavelength-selective demultiplexer (57, 58, 73, 73') are individual integrated optical components.

**7.** System according to Claim 4 or 5, characterized

- in that the demultiplexer (51) and/or the duplexer (71, 91) are each combined with the wavelength-selective demultiplexers (57, 58, 73, 73') to form common integrated optical components.

**Revendications**

**1.** Système optique de transmission d'information (101,111) pour la transmission diplex ou duplex de deux signaux optiques (S1,S2), en particulier pour le domaine des postes d'abonné, à deux émetteurs optiques (99,100 ; 99', 100') et deux récepteurs optiques (109,110 ; 109',110'), dont l'un est accouplé à un émetteur optique et l'autre à l'autre émetteur optique, avec un guide d'ondes lumineuses (104,114), dans lequel la lumière ne peut se propager au-dessus d'une longueur d'onde limite qu'en mode fondamental, système sur lequel les émetteurs et récepteurs optiques fonctionnent à des longueurs d'onde d'exploitation qui se situent nettement au-dessous de la longueur d'onde limite, et sur lequel les émetteurs et/ou récepteurs optiques qui se trouvent aux extrémités du guide d'ondes lumineuses sont raccordés par multiplexeur ou démultiplexeur ou duplexeur à l'extrémité respective du guide d'ondes lumineuses, caractérisé

- en ce que les signaux optiques (S1,S2) irradiés par les émetteurs optiques (99,100 ; 99',100') dans le guide d'ondes lumineuses (104,114) présentent des longueurs d'onde différentes ($\lambda_1$ $\lambda_2$) et sont transmis dans des modes de guide d'ondes lumineuses différents ($LP_{11}$, $LP_{01}$), et
- en ce que le multiplexeur (41) et le démultiplexeur (51) ou les duplexeurs (71,91) sont chacun des coupleurs par fusion à fibres monomodes (21,31), qui sont fabriqués à partir de fibres dissemblables (22,23,32,33) par le diamètre du noyau et de la gaine.

**2.** Système optique de transmission d'information (101,111) pour la transmission diplex ou duplex de deux signaux optiques (S1,S2), en particulier pour le domaine des postes d'abonné, à deux émetteurs optiques (99,100 ; 99', 100') et deux récepteurs optiques (109, 110 ; 109', 110'), dont l'un est accouplé à un émetteur optique, et l'autre à l'autre émetteur optique, avec un guide d'ondes lumineuses (104,114), dans lequel la lumière ne peut se propager au-dessus d'une longueur d'onde limite qu'en mode fondamental, système sur lequel les émetteurs et/ou récepteurs optiques qui se trouvent aux extrémités du guide d'ondes lumineuses sont raccordés par multiplexeur ou démultiplexeur ou duplexeur à l'extrémité respective du guide d'ondes lumineuses, et sur lequel, dans le cas de deux émetteurs optiques raccordés à une extrémité du guide d'ondes lumineuses par un multiplexeur, le multiplexeur est un coupleur par fusion à fibres monomodes fabriqué à partir de fibres semblables, caractérisé

- en ce que dans ce cas le démultiplexeur (51), et dans le cas de duplexeurs (71,91) ces derniers, sont également des coupleurs par fusion à fibres monomodes fabriqués à partir de fibres semblables, et
- en ce que les signaux optiques (S1,S2) irradiés par les émetteurs optiques (99,100 ; 99',100') dans le guide d'ondes lumineuses (104,114) présentent des longueurs d'onde différentes ($\lambda_1$,$\lambda_2$), et que l'un est transmis dans le mode fondamental ($LP_{01}$) de guide d'ondes lumineuses et l'autre dans le mode ($LP_{11}$) immédiatement supérieur au mode fondamental, le signal optique (S1) transmis dans le mode le plus élevé ($LP_{11}$) présentant une première longueur d'onde ($\lambda_1$), qui se situe au-dessous de la longueur d'onde limite du guide d'ondes lumineuses (104,114), et le signal optique transmis dans le mode fondamental ($LP_{01}$) présentant une seconde longueur d'onde ($\lambda_2$), qui se situe au-dessus de la longueur d'onde limite du guide d'ondes lumineuses.

**3.** Système selon la revendication 1, caractérisé

- en ce que l'une des fibres dissemblables (22,23) d'un coupleur par fusion (21,31) est une fibre monomode standard (23,33), et est couplée d'un côté au guide d'ondes lumineuses (104, 114) et de l'autre côté à l'émetteur (100,100') ou récepteur (110, 110') optique, entre lesquels un signal optique est transmis dans le mode fondamental ($LP_{01}$),
- en ce que l'autre fibre (33, 32) d'un coupleur par fusion (21, 31) est plus fine que la fibre monomode standard (23, 33) et est connectée à l'émetteur dont le signal optique est transmis dans le mode le plus élevé (LP11), ou est plus épaisse que la fibre monomode standard (23, 33) et est connectée au récepteur prévu pour la réception du signal optique (S1) transmis dans le mode le plus élevé ($LP_{11}$).

**4.** Système selon l'une des revendications 1, 2 ou 3, caractérisé

- en ce que le démultiplexeur (51) et/ou les duplexeurs (71,91) contiennent chacun dans une fibre conduisant au récepteur optique (109,110,109',110') un démultiplexeur à sélection de longueur d'onde (57,58,73,73') pour filtrage de précision.

**5.** Système selon la revendication 4, caractérisé

- en ce que le démultiplexeur à sélection de longueur d'onde (57,58,73,73') est un coupleur par fusion à fibre monomode à sélection de longueur d'onde.

**6.** Système selon l'une des revendications 4 ou 5, caractérisé

- en ce que le multiplexeur (41), le démultiplexeur (51) les duplexeurs (71,91) et le démultiplexeur à sélection de longueur d'onde (57,58,73,73') sont des éléments intégrés optiques individuels.

**7.** Système selon l'une des revendications 4 ou 5, caractérisé

- en ce que le démultiplexeur (51) et/ou les duplexeurs (71,91) sont chacun assemblés aux démultiplexeurs à sélection de longueur d'onde (57,58,73,73') en éléments intégrés optiques communs.

FIG.1

FIG.2

EP 0 390 002 B1

$S1(\lambda_1, LP_{11})$

$S2(\lambda_2, LP_{01})$

$S1(\lambda_2, LP_{11}) + S2(\lambda_1, LP_{01}) = S$

$\dfrac{l}{2} \quad \Delta z \quad \dfrac{l}{2}$

$L = l + \Delta z$

FIG.3

FIG.4A

FIG.4B

FIG.4C

EP 0 390 002 B1

$S1(\lambda_1, LP_{11})$

$S2(\lambda_2, LP_{01})$

$S = S1(\lambda_1, LP_{11}) + S2(\lambda_2, LP_{01})$

$\frac{l_1}{2}$  $\Delta z$  $\frac{l_1}{2}$

$\emptyset$  $z_{w1}$  $2z_{w1} = L_1$  $z$

FIG.5

$S1(\lambda_1, LP_{11})$

$S2(\lambda_2, LP_{01})$

$\frac{l_2}{2}$  $\Delta z$  $\frac{l_2}{2}$

$\emptyset$  $z_{w2}$  $2z_{w2} = L_2$  $z$

FIG.6

$S1 \longrightarrow$

$S2 \longrightarrow$

$S1(\lambda_1, LP_{11})$

$S2(\lambda_2, LP_{01})$

$S = S1 + S2$

FIG.7

FIG.8

FIG.9

FIG.10